# EUROPEAN PATENT APPLICATION

(11) **EP 4 560 801 A1**
(43) Date of publication of application: **28.05.2025**
(21) Application number: 22966883.5
(22) Date of filing: 01.12.2022
(51) Int. Cl.: H01M 50/188, H01M 50/147, H01M 50/15

(54) **BATTERY CELL, BATTERY, AND ELECTRICAL APPARATUS**

(71) Applicant: Contemporary Amperex Technology Co., Limited, Fujian 352100 (CN)
(72) Inventor: LIN, Denghua, Ningde City, Fujian 352100 (CN); YANG, Daowei, Ningde City, Fujian 352100 (CN); CHEN, Xinxiang, Ningde City, Fujian 352100 (CN); ZHENG, Yulian, Ningde City, Fujian 352100 (CN); WANG, Peng, Ningde City, Fujian 352100 (CN); JIN, Haizu, Ningde City, Fujian 352100 (CN)
(74) Representative: Gong, Jinping
(86) International application number: PCT/CN2022/135735
(87) International publication number: WO 2024/113292

(57) **Abstract**

The present disclosure provides a battery cell, a battery and an electrical apparatus. The battery cell includes a housing comprising a first wall with a through hole; electrode terminal provided on the first wall, each electrode terminal having an end face facing the first wall, and at least a portion of the end face being opposite to the through hole; and a sealing element at least partially surrounding a peripheral side of the through hole, and at least a portion of the sealing element being connected between the end face and the first wall. The sealing element is provided with one of a boss and a groove, at least one of the electrode terminal or the first wall is provided with the other of the boss and the groove, and the boss is fitted with the groove. The battery cell provided in the present disclosure can maintain the sealing element in a coordinated state with the electrode terminal and the first wall when the battery cell is subjected to loads such as impact and vibration, reducing a risk of sealing failure caused by the sealing element detaching from the electrode terminal or the first wall, which is conducive to reducing a risk of electrolyte leakage of the battery cell and improving a safety performance of the battery cell.

## Description

### TECHNICAL FIELD

The present disclosure relates to the field of battery technology, and in particular relates to a battery cell, a battery and an electrical apparatus.

### BACKGROUND

Batteries are widely used in electronic devices, such as mobile phones, laptops, electric trucks, electric cars, electric airplanes, electric ships, electric toy cars, electric toy ships, electric toy airplanes, electric tools, etc. Battery cells may include cadmium-nickel battery cells, nickel-hydrogen battery cells, lithium-ion battery cells, secondary alkaline zinc-manganese battery cells, etc.

In a technology development of battery cells, in addition to improving a performance of battery cells, how to improve a safety performance of battery cells is also an issue that cannot be ignored. Therefore, how to improve the safety performance of battery cells is a technical issue in the technology of battery cells to be continuously improved.

### SUMMARY

The present disclosure provides a battery cell, a battery and an electrical apparatus capable of improving a safety performance of the battery cell.

In a first aspect, embodiments of the present disclosure provide a battery cell, including a housing, an electrode terminal and a sealing element. The housing includes a first wall with a through hole. The electrode terminal is provided on the first wall, and the electrode terminal has an end face facing the first wall, and at least part of the end face is opposite to the through hole. The sealing element at least partially surrounds a peripheral side of the through hole, and at least part of the sealing element is connected between the end face and the first wall. The sealing element is provided with one of a boss and a groove, at least one of the electrode terminal or the first wall is provided with the other of the boss and the groove, and the boss is fitted with the groove.

In the battery cell provided in the embodiments of the present disclosure, the sealing element is provided with one of the boss and the groove, and at least one of the electrode terminal or the first wall is provided with the other of the boss and the groove. The boss is fitted with the groove. When the battery cell is subjected to loads such as impact or vibration, the sealing element can still remain to be fitted with the electrode terminal and the first wall, reducing a risk of sealing failure caused by the sealing element detaching from the electrode terminal or the first wall, which is beneficial to reducing a risk of electrolyte leakage in the battery cell and thereby improving a safety performance of the battery cell.

In some embodiments, a size of the boss along a thickness direction of the first wall is h, a distance between the boss and a centerline of the through hole is d, and 1.8mm²≤h*d≤120mm² is satisfied. A good fitting relationship between the boss and the groove can be maintained by the setting of 1.8mm²≤h*d when the battery cell is subjected to loads such as impact or vibration, which is beneficial to further ensuring a sealing effect of the sealing element, reducing a risk of electrolyte leakage in the battery cell, and further improving the safety performance of the battery cell. Meanwhile, an energy density of the battery cell can be guaranteed as much as possible under the premise of ensuring the sealing effect of the sealing element by the setting of h * d≤120mm².

In some embodiments, 2mm²≤h*d≤90mm² is satisfied. In this way, the energy density of the battery cell is guaranteed, and it is beneficial to further ensuring the sealing effect of the sealing element.

In some embodiments, the first wall is provided with the boss and the sealing element is provided with the groove. The boss is fitted with the groove to increase a fitting area between the first wall and the sealing element. At the same time, the boss is fitted with the groove to provide a certain limiting effect on the sealing element along a direction parallel to the first wall, reducing the risk of sealing failure caused by a movement of the sealing element relative to the first wall and the electrode terminal when the battery cell is subjected to loads such as impact or vibration.

In some embodiments, the electrode terminal is provided with the boss protruding towards the sealing element, and the sealing element is provided with the groove. The boss of the electrode terminal is fitted with the groove of the sealing element to limit a displacement of the sealing element relative to the electrode terminal. When the battery cell is subjected to loads such as impact or vibration, a deformation of the electrode terminal and the first wall is beneficial to maintaining the fitting state of the sealing element and electrode terminal, thereby ensuring the sealing effect of the sealing element.

In some embodiments, the sealing element is provided with the boss, and at least one of the electrode terminal or the first wall is provided with the groove. The sealing element provided with the boss not only enhances a structural strength of the sealing element itself, but also helps to guarantee a fitting reliability of the sealing element and the first wall, or the sealing element and the electrode terminal, which is beneficial to reducing the risk of sealing failure of the sealing element when the battery cell is subjected to loads such as impact or vibration.

In some embodiments, a size h of the boss along a thickness direction of the first wall satisfies: h≤3mm. In this way, a risk of cracking of the boss can be effectively reduced, which is further beneficial to ensuring that the boss and the groove remain in a fitted state and reducing the risk of sealing failure.

In some embodiments, 0.2mm≤h≤3mm is satisfied. In this way, the risk of the boss detaching from the groove can be effectively reduced. When the battery cell is subjected to loads such as impact or vibration, the boss can still remain to be fitted with the groove, which is beneficial to improving the sealing effect of the sealing element and enhancing the safety performance of the battery cell.

In some embodiments, a size δ of the boss along a first direction satisfies δ≥0.2mm, and the first direction is a direction passing through a geometric center of the sealing element and perpendicular to a thickness direction of the first wall. In this way, while ensuring the manufacturability of the boss, the risk of the boss detaching from the groove can be reduced, further improving the sealing effect of the sealing element and the safety performance of the battery cell.

In some embodiments, the boss is provided at an outer edge of a peripheral side of the sealing element. With the boss provided on the outer edge of the peripheral side of the sealing element, when the battery cell is subjected to loads such as vibration or impact, it is beneficial to maintaining an interlocking state between the boss and the groove, reducing the risk of the boss detaching from the groove, and thereby reducing the risk of sealing failure of the sealing element on the battery cell, which is beneficial to improving the safety performance of the battery cell.

In some embodiments, the sealing element is provided with an avoidance recess arranged at an edge of a side of the sealing element facing away from the boss, and at least part of the avoidance recess is opposite to the boss. With the avoidance recess, an internal stress of the sealing element can be relieved, reducing the risk of cracking due to excessive internal stress, which is beneficial to improving the structural strength of the sealing element.

In some embodiments, the electrode terminal is provided with the groove. In this way, the groove of the electrode terminal is fitted with the boss of the sealing element to limit the sealing element and maintain the sealing performance of the sealing element on the battery cell when it is subjected to loads such as vibration or impact.

In some embodiments, a distance d1 between the boss and an inner wall of the groove satisfies: 0.05mm≤d1≤0.2mm. In this way, the reliability of the fitting between the boss and the groove is guaranteed, and it is beneficial to reducing an assembly difficulty of the boss and the groove.

In some embodiments, the electrode terminal includes a conductive portion and an injection molding portion provided on a peripheral side of the conductive portion, and the groove is formed on the injection molding portion. It is beneficial to increasing an electrical connection area of the electrode terminal and a pole tab, and improving a current carrying capacity of the electrode terminal. And the groove is formed in the injection molding portion, which has strong machinability.

In some embodiments, the electrode terminal further includes a welding portion arranged inside the injection molding portion, and a minimum distance d2 from an edge of the injection molding portion to the welding portion satisfies d2≥0.2mm. It is beneficial to ensuring an insulation effect of the injection molding portion from the welding portion and the conductive portion while ensuring the structural strength of the injection molding portion.

In some embodiments, the sealing element is provided with a protrusion protruding in a direction towards the first wall, and the protrusion is located within the through hole. When the battery cell is subjected to loads such as impact or vibration, the limiting effect of the inner wall of the through hole on the protrusion reduces the risk of the sealing element detaching from the first wall, which is beneficial to further ensuring the sealing effect of the sealing element and improving the safety performance of the battery cell.

In some embodiments, the sealing element is provided with the groove, and the first wall is provided with the boss protruding towards the the sealing element. A possibility of sealing failure of the battery cell is reduced when the battery cell is subjected to loads such as impact or vibration, which is beneficial to improving the safety performance.

In some embodiments, the boss is formed at an edge of a side of the first wall near the through hole. In this way, the boss is easy to be machined and the mutual fitting between the boss and the groove is facilitated during an assembly process. In addition, with the groove near the through hole and on the sealing element, the internal stress of the sealing element can be reduced, which is beneficial to reducing the risk of cracking due to excessive internal stress.

In a second aspect, embodiments of the present disclosure provide a battery including the battery cell according to any one of embodiments in the first aspect.

The battery provided according to the embodiments of the present disclosure has the same technical effect by adopting the battery cell provided in any of the above embodiments, which will not be repeated here.

In a third aspect, embodiments of the present disclosure provide an electrical apparatus including the battery according to embodiments in the second aspect for providing provide electrical energy.

The electrical apparatus provided according to the embodiments of the present disclosure has the same technical effect by adopting the battery provided in the embodiments of the present disclosure, which will not be repeated here.

### BRIEF DESCRIPTION OF THE DRAWINGS

In order to illustrate more clearly technical solutions of embodiments of the present disclosure, drawings that need to be used in embodiments of the present disclosure will be briefly introduced below. It is obvious that the drawings described below are only some embodiments of the present disclosure, and for those skilled in the art, other drawings can also be obtained according to the drawings without creative labor.
FIG. 1 is a schematic structural diagram of a vehicle provided in embodiments of the present disclosure;
FIG. 2 is a schematic exploded diagram of a battery provided in embodiments of the present disclosure;
FIG. 3 is a schematic structural diagram of a battery module in a battery provided in embodiments of the present disclosure;
FIG. 4 is a schematic exploded diagram of a battery cell provided in some embodiments of the present disclosure with part of a structure omitted;
FIG. 5 is a front view of a part of a structure of a battery cell provided in embodiments of the present disclosure;
FIG. 6 is a schematic cross-sectional structural diagram cut along A-A in FIG. 5;
FIG. 7 is a partial enlarged schematic diagram at part B in FIG. 6;
FIG. 8 is another schematic cross-sectional structural diagram cut along A-A in FIG. 5;
FIG. 9 is another schematic cross-sectional structural diagram cut along A-A in FIG. 5;
FIG. 10 is a front view of a sealing element in a battery cell provided in embodiments of the present disclosure;
FIG. 11 is a schematic cross-sectional structural diagram cut along C-C in FIG. 10;
FIG. 12 is another schematic cross-sectional structural diagram cut along C-C in FIG. 10.

In the drawings, figures are not drawn to an actual scale.

### Description of accompanying drawings:

1. Vehicle; 1a. Motor; 1b. Controller;
10. Battery; 11. First box part; 12. Second box part;
] 20. Battery module;
30. Battery cell; 30a, boss; 30b, groove; 31. Housing; 311. housing body; 311a, Opening; 312. End cap; 313. First wall; 313a, Through hole; 32. Electrode assembly; 33. Electrode terminal; 33a, End face; 331. Conductive portion; 332. Injection molding portion; 333. Welding portion; 34. Sealing element; 34a. Avoidance recess; 34b, Protrusion;
X. First direction.

### DETAILED DESCRIPTION

In order to make purposes, technical solutions and advantages of embodiments of the present disclosure more clear, the technical solutions in embodiments of the present disclosure will be described clearly in combination with drawings attached to embodiments of the present disclosure. Obviously, embodiments described are part, and not all of embodiments of the present disclosure. Based on embodiments in the present disclosure, all other embodiments obtained by those skilled in the art without creative work shall fall within the scope of protection in the present disclosure.

Unless otherwise defined, all technical and scientific terms used in the present disclosure have the same meaning as those normally understood by those skilled in the art. In the present disclosure, terms used in the description of the present disclosure are for purposes of describing specific embodiments only and are not intended to restrict the present disclosure. Terms "including" and "having" and any variation thereof in the description, claims and the above drawings of the present disclosure are intended to cover non-exclusive inclusion. Terms "first", "second", etc. in the description and claims or in the above drawings of the present disclosure are used to distinguish between different objects and are not used to describe a particular order or primary or secondary relationship.

Reference to "embodiments" in the present disclosure means that a particular feature, structure or characteristic described in conjunction with embodiments may be included in at least one embodiment of the present disclosure. The presence of the phrase at various points in the specification does not necessarily refer to the same embodiment, nor is it a separate or alternative embodiment that is mutually exclusive with other embodiments.

In the description of the present disclosure, it should be noted that, unless otherwise stated or defined, terms "installation", "connected to", "connected with", "attachment" and the like are to be understood broadly, and may be, for example, a fixed connection, a detachable connection, or an integral connection; they can be connected directly or indirectly through an intermediate medium or an internal communication between two elements. The specific meaning of the above terms in the present disclosure can be understood by those skilled in the art according to actual circumstance.

The term "and/or" in the present disclosure is only an association relationship describing associated objects, indicating that there can be three kinds of relationships, for example, C and/or D, can mean: there is C alone, there is C and D simultaneously, and there is D alone. In addition, the character "/" in the present disclosure generally indicates that the associated objects are in an "or" relationship.

In embodiments of the present disclosure, the same reference sign represents the same part, and for brevity, a detailed description of the same part is omitted in different embodiments. It is understood that the thickness, length, etc. of various components in embodiments of the present disclosure as illustrated and the overall thickness, length, etc. of an integrated device are illustrative only and should not constitute any limitation to the present disclosure.

The term "a plurality of" as used in the present disclosure means more than two (including two).

In the present disclosure, a battery cell may include a lithium-ion secondary battery cell, a lithium-ion primary battery cell, a lithium-sulfur battery cell, a sodium lithium ion battery cell, a sodium ion battery cell, or a magnesium ion battery cell, etc. Embodiments of the present disclosure are not limited thereto. The battery cell can have cylindrical, flat, rectangular, or other shapes, and embodiments of the present disclosure are not limited thereto. The battery cell is generally divided into three types according to a packaging method: a cylindrical battery cell, a square battery cell, and soft pack battery cell, and embodiments of the present disclosure are not limited thereto.

The battery referred to in the embodiments of the present disclosure refers to a single physical module including one or more battery cells to provide higher voltage and capacity. For example, the battery mentioned in the present disclosure may include battery modules or battery packs, etc. The battery generally includes a box for encapsulating one or more battery cells. The box can prevent liquids or other foreign objects from affecting charging or discharging of battery cells.

The battery cell includes an electrode assembly and an electrolyte. The electrode assembly includes a positive electrode sheet, a negative electrode sheet and a separator. The battery cell works mainly by a movement of metal ions between the positive electrode sheet and the negative electrode sheet. The positive electrode sheet includes a positive current collector and a positive active material layer which is applied on the surface of the positive current collector. The positive current collector includes a positive current collector part and a positive protrusion protruding from the positive current collector part. The positive current collector part is coated with the positive active substance layer, and at least part of the positive protrusion is not coated with the positive active substance layer. The positive protrusion is used as a positive tab. Taking the lithium-ion battery as an example, the material of the positive current collector can be aluminum, and the positive active material layer includes the positive active material, which can be lithium cobaltate, lithium iron phosphate, lithium ternary or lithium manganate, etc. The negative electrode sheet includes a negative current collector and a negative active material layer which is applied on the surface of the negative current collector. The negative current collector includes a negative current collector part and a negative protrusion protruding from the negative current collector. The negative current collector part is coated with the negative active substance layer, and at least part of the negative protrusion is not coated with the negative active substance layer. The negative protrusion is used as the negative tab. The material of the negative current collector can be copper, and the negative active material layer includes the negative active material, which may be carbon or silicon. In order to guarantee the passage of high current without melting, multiple positive tabs are provided and stacked together, and multiple negative tabs are provided and stacked together. The material of the separator can be polypropylene (PP) or PE (polyethylene). In addition, the electrode assembly can have a wound structure or a stacked structure, and embodiments of the present disclosure are not limited thereto.

After founding the problem of insufficient safety performance of the battery, inventors conducted a systematic analysis and research on the structure and working process of the battery cell. It was found that during use, the battery cell is inevitably subjected to loads such as impact or vibration. As the number of loads such as impact or vibration subjected by the battery cell increases, a sealing element between the electrode terminal and the end cap in the battery cell will be deformed or even fall off, the sealing of the housing of the battery cell will be damaged, and there is a risk of electrolyte leakage in the housing, which seriously affects the safety performance of the battery cell.

Based on the above-mentioned problem found by the inventors, the inventors have improved the structure of the battery cell. The technical solution described in embodiments of the present disclosure is applicable to the battery cell, the battery containing the battery cell, and the electrical apparatus using the battery.

The battery cell provided in embodiments of the present disclosure includes a housing, electrode terminal or a sealing element. The housing has a first wall with a through hole. The electrode terminal is provided on the first wall, and each electrode terminal has an end face facing the first wall, and at least part of the end face is opposite to the through hole. The sealing element at least partially surrounds a peripheral side of the through hole, and at least part of the sealing element is connected between the end face and the first wall. The sealing element is provided with one of a boss and a groove, at least one of the electrode terminal or the first wall is provided with the other of the boss and the groove, and the boss is fitted with the groove.

In the battery cell provided in the embodiments of the present disclosure, the sealing element is provided with one of the boss and the groove, and at least one of the electrode terminal or the first wall is provided with the other of the boss and the groove. The boss and is fitted with the groove. When the battery cell is subjected to loads such as impact or vibration, a risk of sealing failure caused by the detached sealing element is reduced, which is beneficial to reducing a risk of electrolyte leakage in the battery cell and thereby improving a safety performance of the battery cell.

Electrical apparatus can be vehicles, mobile phones, portable devices, laptops, ships, spacecraft, electric toys, electric tools and the like. The vehicles can be fuel vehicles, gas vehicles or new energy vehicles. The new energy vehicles can be pure electric vehicles, hybrid vehicles, extended-range vehicles and the like. The spacecraft include planes, rockets, space shuttles, spaceships, and the like. The electric toys include stationary or mobile electric toys, such as game consoles, electric car toys, electric ship toys and electric aircraft toys. The electric tools include metal cutting electric tools, grinding electric tools, assembly electric tools and railway electric tools, such as electric drills, electric grinders, electric wrenches, electric screwdrivers, electric hammers, impact electric drills, concrete vibrators and planers. There are no special restrictions on the above-mentioned electrical devices embodiments of the present disclosure.

The following embodiments, for the sake of illustration, take an electrical apparatus as an example of a vehicle.

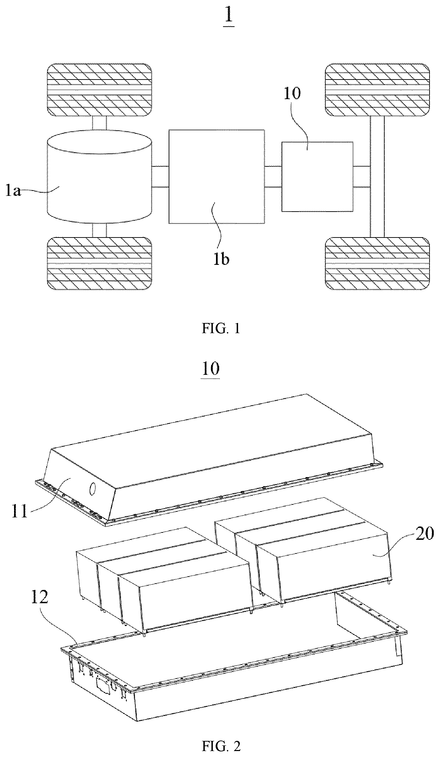

As shown in FIG. 1, a battery 10 is provided in the interior of a vehicle 1, and can be arranged in the bottom or in the head or back of the vehicle 1. The battery 10 can be configured for providing electricity to the vehicle 1, for example, the battery 10 can be used as an operating power source for the vehicle 1.

The vehicle 1 may also include a controller 1b and a motor 1a. The controller 1b is configured for controlling the battery 10 to provide electricity to the motor 1a, for example, for electricity requirements for the starting, navigation and driving of the vehicle 1.

In some embodiments of the present disclosure, the battery 10 may be used not only as an operating power source for the vehicle 1, but also as a driving power source for the vehicle 1, providing driving power to the vehicle 1 in place or in part in place of fuel or natural gas.

As shown in FIG. 2, the battery 10 includes battery cells (not shown in FIG. 2). The battery 10 may also include a box for housing the battery cells.

The box is configured for housing the battery cells and can be of a variety of structures. In some embodiments, the box may include a first box part 11 and a second box part 12 that are mutually covered. The first box part 11 and the second box part 12 jointly define the accommodating space for accommodating the battery cells. The second box part 12 can have a hollow structure with an opening at one end, the first box part 11 can have a plate structure, and the first box part 11 fits an opening side of the second box part 12 to form the box with the accommodating space. Both the first box part 11 and the second box part 12 may have a hollow structure with an opening at one side. An opening side of the first box part 11 fits an opening side of the second box part 12 to form the box with the accommodating space. Of course, the first box part 11 and the second box part 12 can be in a variety of shapes, such as cylinders, cuboids, etc.

In order to improve the tightness of the first box part 11 and the second box part 12 that have been connected, sealing parts, such as sealant and sealing rings, can also be arranged between the first box part 11 and the second box part 12.

In a case that the first box part 11 fits the second box part 12, the first box part 11 may also be called an upper box cover, and the second box part 12 may also be called a lower box.

In the battery 10, one or a plurality of battery cells can be provided. If the plurality of battery cells are provided, the plurality of battery cells can be in a series connection, a parallel connection, or a mixed connection. The mixed connection means that the plurality of battery cells are connected in series and parallel. The plurality of battery cells can be directly in a series connection, a parallel connection, or a mixed connection, and then the entirety composed of the plurality of battery cells is accommodated in the box. The plurality of battery cells can be in a series connection, a parallel connection, or a mixed connection to form a battery module 20, and a plurality of battery modules 20 can be in a series connection, a parallel connection, or a mixed connection to form the entirety, and accommodated in the box.

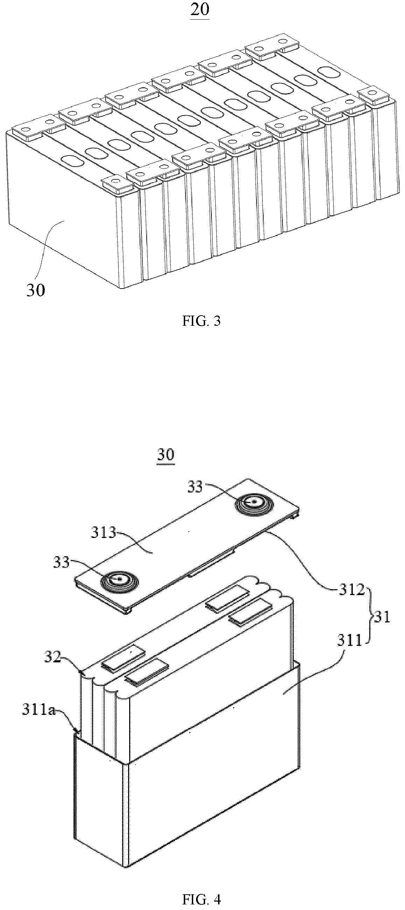

In some embodiments, as shown in FIG. 3, which is a schematic structural diagram of the battery module 20 as shown in FIG. 2. In the battery module 20, a plurality of battery cells 30 are provided. The plurality of battery cells 30 can be firstly in a series connection, a parallel connection, or a mixed connection to form a battery module 20. A plurality of battery modules 20 can be in a series connection, a parallel connection, or a mixed connection to form the entirety, and accommodated in the box.

In some embodiments, the plurality of battery cells 30 in the battery module 20 may be electrically connected through a bus component to achieve parallel, series, or mixed connection of the plurality of battery cells 30 in the battery module 20.

Please refer to FIG. 4, which is a schematic exploded diagram of the battery cell 30 as shown in FIG. 3. The battery cell 30 provided in embodiments of the present disclosure includes an electrode assembly 32 and a housing 31 provided with an accommodating chamber within which the electrode assembly 32 is accommodated.

In some embodiments, the housing 31 may include a housing body 311 and an end cap 312. The housing body 311 has a hollow structure with an opening at one side, and the end cap 312 fits the opening 311a of the housing body 311 to form a sealing connection and thus form a sealing space for accommodating the electrode assembly 32 and electrolyte.

When the battery cell 30 is assembled, the electrode assembly 32 can be firstly placed into the housing 311, and then the end cap 312 fits the opening 311a of the housing body 311. Then, the electrolyte can be injected into the housing body 311 through an electrolyte injection port on the end cap 312.

In some embodiments, the housing 31 may also be configured for accommodating the electrolytes, such as electrolytic. The housing 31 can be provided in multiple structural forms.

A schematic structural diagram of the battery cell 30 provided in embodiments of the present disclosure is shown in FIG. 4.

The housing body 311 can be of various shapes, such as cylindrical, rectangular, etc. The shape of the housing body 311 can be determined based on the specific shape of electrode assembly 32. For example, if the electrode assembly 32 has a cylindrical structure, the housing body 311 can be selected to have a cylindrical structure. If the electrode assembly 32 has a rectangular structure, the housing body 311 can be selected to have a rectangular structure. In FIG. 4, for example, both the housing body 311 and the electrode assembly 32 have rectangular structures.

The material of the housing body 311 can be various, such as copper, iron, aluminum, stainless steel, aluminum alloy, etc., and there are no special restrictions on this in the embodiments of the present disclosure.

One or more electrode assemblies 32 may be provided and accommodated within the housing body 311. In FIG. 4, two electrode assemblies 32 are accommodated within the housing body 311.

In some embodiments, the electrode assembly 32 further includes a positive electrode sheet, a negative electrode sheet, and a separator. The electrode assembly 32 can have a wound structure formed by the positive electrode sheet, the separator, and the negative electrode sheet that are wound. The electrode assembly 32 can also have a stacked structure formed by the positive electrode sheet, the separator, and the negative electrode sheet that are stacked.

The positive electrode sheet may include a positive current collector and a positive active material layer. The positive electrode active material layer is coated on the surface of the positive electrode current collector. The negative electrode sheet can include a negative current collector and a negative electrode active material layer. The negative active material layer is coated on the surface of the negative current collector. The separator is located between the positive electrode sheet and the negative electrode sheet, to isolate the positive electrode sheet and the negative electrode sheet, and reduce the risk of short circuits between the positive electrode sheet and the negative electrode sheet.

The tabs in the electrode assembly 32 includes a positive tab and a negative tab. The positive tab can be the part of the positive electrode current collector that is not coated with the positive electrode active material layer. The negative tab can be the part of the negative electrode current collector that is not coated with the negative electrode active material layer.

As shown in FIGS. 4, 5, 6, and 7, the battery cell 30 provided according to embodiments of the present disclosure includes the housing 31, electrode terminals 33, and a sealing element 34. The housing 31 has a first wall 313 provided with a through hole 313a. Each electrode terminal 33 is provided on the first wall 313, and has an end face 33a facing the first wall 313. At least part of the end face 33a is opposite to the through hole 313a. The sealing element 34 at least partially surrounds a peripheral side of the through hole 313a, and at least partially is connected between the end face 33a and the first wall 313. The sealing element 34 is provided with one of a boss 30a and a groove 30b, and at least one of the electrode terminal 33 or the first wall 313 is provided with the other of the boss 30a and the groove 30b, and the boss 30a is fitted with the groove 30b.

Optionally, the first wall 313 can be a part of the housing body 311 of the housing 31, or the first wall 313 can be a part of the end cap 312 of the housing body 311. Of course, it can also be provided that each of the housing body 311 and the end cap 312 of the housing 31 has the first wall 313, which can be selected according to actual needs.

The end face 33a of electrode assembly 32 is provided toward the first wall 313, and at least part of the end face 33a is opposite to the through hole 313a, so the tab of the electrode assembly 32 is connected to the end face 33a through the through hole 313a, or an adapter member is connected to the end face 33a and the tab through the through hole 313a, thereby achieving electrical connection between the electrode assembly 32 and the electrode terminal 33 of the battery cell 30.

At least part of the sealing element 34 surrounding the peripheral side of the through hole 313a means that, the sealing element 34 entirely surrounds the peripheral side of the through hole 313a, or a portion of the sealing element 34 surrounds the peripheral side of the through hole 313a and another portion thereof can be located inside the through hole 313a.

The through hole 313a can be a circular hole, a waist shaped hole, or a hole in other shape. At least part of the sealing element 34 surrounds the periphery of the through hole 313a and is connected between the first wall 313 and the end face 33a. The sealing element 34 is compressed and deformed to seal the through hole 313a, thereby reducing the risk of electrolyte inside the battery cell 30 leaking through the through hole 313a.

The sealing element 34 is provided with one of the boss 30a and the groove 30b, at least one of the electrode terminal 33 or the first wall 313 is provided with the other of the boss 30a and the groove 30b, and the boss 30a is fitted with the groove 30b.

Optionally, the sealing element 34 may be provided with the boss 30a, one of the electrode terminal 33 and the first wall 313 may be provided with the groove 30b, or, each of the electrode terminal 33 and the first wall 313 may be provided with the groove 30b. Alternatively, the sealing element 34 may be provided with the groove 30b, and one of the electrode terminal 33 and the first wall 313 may be provided with the boss 30a. Of course, each of the electrode terminal 33 and the first wall 313 may be provided with the groove 30b.

Of course, it is also possible to provide the sealing element 34 with both the groove 30b and the boss 30a. Depending on the position of the boss 30a or the groove 30b on the sealing element 34, the first wall 313 or electrode terminal 33 can be provided with the groove 30b or the boss 30a, in order to achieve a fitting between the sealing element 34 and at least one of the first wall 313 or the electrode terminal 33 through the boss 30a and the groove 30b.

By the fitting of the boss 30a with the groove 30b, the connection strength between the sealing element 34 and the electrode terminal 33 or between the sealing element 34 and the first wall 313 can be improved. In addition, the boss 30a is fitted with the groove 30b to provide a certain limiting effect on the sealing element 34, thereby limiting the position of the sealing element 34 relative to the electrode terminal 33 and the first wall 313. When the battery cell 30 is subjected to loads such as impact or vibration, the sealing element 34 is not easily detached from the electrode terminal 33 or the sealing element 34, which is beneficial to maintaining the sealing effect of the sealing element 34 on the through hole 313a of the first wall 313 and reducing the risk of electrolyte leakage in the battery cell 30.

In the battery cell 30 provided in the embodiments of the present disclosure, the sealing element 34 is provided with one of the boss 30a and the groove 30b, and at least one of the electrode terminal 33 or the first wall 313 is provided with the other of the boss 30a and the groove 30b. The boss 30a is fitted with the groove 30b. When the battery cell 30 is subjected to loads such as impact or vibration, the sealing element 34 can still remain to be fitted with the electrode terminal 33 and the first wall 313, reducing a risk of sealing failure caused by the sealing element 34 detaching from the electrode terminal 33 or the first wall 313, which is beneficial to reducing a risk of electrolyte leakage in the battery cell 30 and thereby improving a safety performance of the battery cell 30.

In some embodiments, the size of the boss 30a is h, the distance between the boss 30a and a centerline of the through hole 313A is d, 1.8mm²≤H*D≤120mm² is satisfied.

In an example, h*d can be 1.8mm², 2mm², 10mm², 20mm², 30mm², 40mm², 50mm², 60mm², 70mm², 80mm², 90mm², 100mm², 110mm² or 120mm² etc.

It is understood that when the battery cell 30 is subjected to loads such as impact or vibration, the electrode terminal 33 and the first wall 313 will deform. And due to the cantilever beam effect, the closer to the centerline of the through hole 313a, the greater the deformation of the electrode terminal 33 and the first wall 313, and the greater the distance therebetween. Therefore, in order to guarantee a good fitting of the boss 30a and the groove 30b when the electrode terminal 33 and the first wall 313 deform, the closer the boss 30a is to the centerline of the through hole 313a, the height of the boss 30a is also higher, that is, the distance d of the boss 30a to the centerline of the through hole 313a is smaller, and the size h of the boss 30a is required to be larger.

After long-term research and a large number of experiments, the inventors found that with the setting of 1.8mm²≤h*d, the boss 30a and the groove 30b can still remain in a good fit when the battery cell 30 is subjected to loads such as impact or vibration, which is beneficial to further ensuring the sealing effect of the sealing element 34 on the battery cell 30, reducing the risk of electrolyte leakage in the battery cell 30, in order to further improve the safety performance of the battery cell 30. Meanwhile with the setting of h*d≤120mm², the energy density of battery cell 30 can be guaranteed as much as possible under the premise of ensuring the sealing effect of the sealing element 34.

In some embodiments, 2mm²≤h*d≤90mm² is satisfied.

In an example, h*d can be 2mm², 20mm², 30mm², 40mm², 50mm², 60mm², 70mm², 80mm² or 90mm², etc.

After further research and experiments, the inventors found that with the setting of 2mm²≤h*d≤90mm², it is further beneficial to ensuring the sealing effect of the sealing element 34 under the premise of ensuring the energy density of the battery cell 30.

Below, combined with embodiments 1 to 6 and comparative examples 1 to 2, the effect of h*d on the performance of the battery cell 30 illustrates, wherein the distance d of the boss 30a and the centerline of the through hole 313a, and the size h of the boss 30a of the battery cell 30 in the embodiments 1 to 6 and comparative examples 1 to 2 is shown in Table 1, respectively. In Table 1, the units of both h and d are mm, the unit of h * d is mm².

Twenty battery cells 30 are provided in embodiments 1 to 6, 20 and comparative examples 1 to 2, respectively. The bottom ball test is carried out on each battery cell 30. Specific steps of the bottom ball test is as follows: the battery cell 30 is clamped; the electrode 33 is oriented toward a push head, and the push head has a diameter of 50mm; the push head is pushed along a direction parallel to the centerline of the through hole 313a to cause a deformation > 4mm of the electrode terminal 33; it is observed or tested that whether undesirable phenomena such as electrolyte leakage or cracking occur in the battery cell 30. The results are shown in Table 1.

**Table 1-Effect of h*d on the performance of the battery cell 30**

| | h | d | h*d | Number of poor sealing in bottom ball test |
|---|---|---|---|---|
| Embodiment 1 | 0.3 | 6 | 1.8 | 1 |
| Embodiment 2 | 0.4 | 8 | 3.2 | 0 |
| Embodiment 3 | 2 | 15 | 30 | 0 |
| Embodiment 4 | 2.5 | 20 | 50 | 0 |
| Embodiment 5 | 3 | 25 | 90 | 0 |
| Embodiment 6 | 4 | 30 | 120 | 0 |
| Comparative example 1 | 0.2 | 7 | 1.4 | 17 |
| Comparative example 2 | 4 | 35 | 140 | 0 |

From Table 1, it can be seen that in the comparative example of h*d less than 1.8mm², for 17 of the 20 battery cells 30, undesirable phenomena such as electrolyte leakage or cracking occurred in the battery cells 30 after the bottom ball test. In the embodiment of h*d is greater than or equal to 1.8mm², the phenomenon of leakage did not occur in the battery cell 30 after the bottom ball test, indicating that the sealing performance of the sealing element 34 of the battery cell 30 is good.

The inventors further found that in the case of the value of h*d greater than 120mm², the electrode terminal 33 and the sealing element 34 will occupy more space, limiting the increase in the energy density of the battery cell 30. For this reason, h*d≤120mm² is set.

Therefore, 1.8mm²≤h*d≤120mm² is set, to effectively improve the connection reliability of the boss 30a and the groove 30b under the premise of ensuring a higher energy density of the battery monomer 30, which is beneficial to improving the sealing effect of the sealing element 34, thereby improving the safety performance of the battery cell 30.

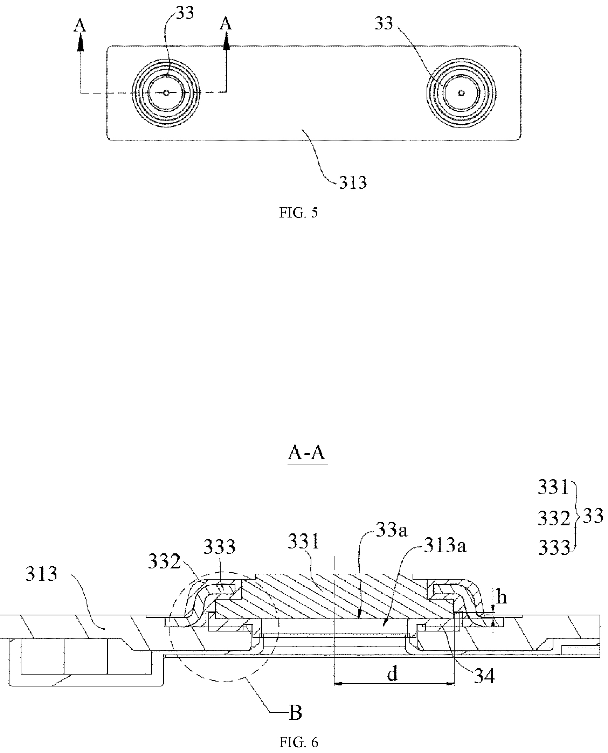

Please continue to refer to FIG. 5, FIG. 6 and FIG. 7. In some embodiments, the first wall 313 is provided with the boss 30a, and the sealing element 34 is provided with the groove 30b.

The boss 30a of the first wall 313 projects toward the sealing element 34, and the groove 30b of the sealing element 34 recesses toward the first wall 313 and is oppositely arranged to the boss, so as to achieve the mutual fitting therebetween.

In this way, the boss 30a is fitted with the groove 30b to increase the fitting area of the first wall 313 and sealing element 34. Meanwhile, the boss 30a is fitted with the groove 30b to provide certain limiting effect on the sealing element 34 along the direction parallel to the first wall 313, to reduce the risk of the sealing failure caused by displacement of the sealing element 34 relative to the first wall 313 and the electrode terminal 33 when the battery cell 30 is subjected to loads such as impact or vibration,.

In some embodiments, the electrode terminal 33 is provided with the boss 30a projecting toward the sealing element 34, and the sealing element 34 is provided with the groove 30b.

The boss 30a of the electrode terminal 33 projects toward the sealing element 34, and the groove 30b of the sealing element 34 faces away from the electrode terminal 33, so the boss 30a of the electrode terminal 33 is fitted with the groove 30b of the sealing element 34.

Optionally, the electrode terminal 33 is formed by injection molding, and the electrode terminal 33 includes a conductive portion 331, an injection molding portion 332 and a welding portion 333. The conductive portion 331 is electrically connected with the tab of the electrode assembly 32, the injection molding portion 332 and the welding portion 333 are each formed with the conductive portion 331 by injection molding, and the welding portion 333 is welded and connected with the first wall 313, so that while realizing the connection between the first wall 313 and the electrode assembly 33, the conductive portion 331 and the first wall 313 are insulated from each other. The boss 30a of the electrode terminal 33 can be formed in the conductive portion 331, or, the boss 30a of the electrode terminal 33 can be formed in the injection molding portion 332.

In this way, the boss 30a is fitted with the electrode terminal 33 and the groove 30b of the sealing element 34 to limit the displacement of the sealing element 34 relative to the electrode terminal 33. When the battery unit 30 is subjected to loads such as impact or vibration, the deformation of the electrode terminal 33 and the first wall 313 is beneficial to maintaining the sealing element 34 and the electrode terminal 33 in a fitted state, thereby ensuring the sealing effect of the sealing element 34.

As shown in FIGS. 5 to 9, in some embodiments, the sealing element 34 is provided with the boss 30a, and at least one of the first wall 313 or the electrode terminal 33 is provided with the groove 30b.

Optionally, one of the first wall 313 and the electrode terminal 33 can be provided with the groove 30b, or each of the first wall 313 and the electrode terminal 33 can be provided with groove 30b.

The boss 30a of the sealing element 34 can protrude toward the first wall 313, or the boss 30a of the sealing element 34 can protrude toward the electrode terminal 33. Alternatively, the sealing element 34 has both the protrusion 30a toward the first wall 313 and the protrusion 30a toward the electrode terminal 33. It can be setting according to specific needs of the mutual fit between the boss 30a and the groove 30b.

The sealing element 34 is provided with the boss 30a, to not only improve the structural strength of the sealing element 34 itself, but also help to guarantee the reliability of the mutual fitting between the sealing element 34 and the first wall 313, or between the sealing element 34 and the electrode terminal 33. When the battery cell 30 is subjected to loads such as impact or vibration, it is beneficial to reducing the risk of sealing failure of the sealing element 34 on the battery cell 30.

In some embodiments, the size h of the boss 30a along the thickness direction of the first wall 313 satisfies: h≤3mm.

For example, h can be 3mm, 2.8mm, 2.5mm, 2mm, 1.5mm, or 1mm, etc.

It can be understood that if h is too high, the structure of the boss 30a is unstable. Especially for the boss 3a on the sealing element 34, if h is too high, the structure of boss 30a is unstable and prone to deformation, and the strength of the boss 30a is low. Under the action of loads such as vibration or impact, there is a certain risk of cracking of the boss 30a on the sealing element 34.

After systematic analysis and extensive experiments, the inventors found that the setting of h≤3mm can effectively reduce the risk of cracking of the boss 30a, further facilitate the maintenance of a fitted state in the boss 30a and the groove 30b, and reduce the risk of sealing failure of the sealing element 34.

In some embodiments, 0.2mm≤h≤3mm is satisfied.

For example, h can be 0.2mm, 0.5mm, 0.8mm, 1mm, 1.2mm, 1.5mm, 1.8mm, 2.2mm, 2.8mm, or 3mm, etc.

After systematic research and extensive experiments, the inventors found that the setting of 0.2mm≤h can effectively reduce the risk of the boss 30a detaching from the groove 30b. Even when the battery cell 30 is subjected to loads such as impact or vibration, the fitting between the boss 30a and the groove 30b can still be maintained, which is beneficial to improving the sealing effect of the sealing element 34 and enhancing the safety performance of the battery cell 30.

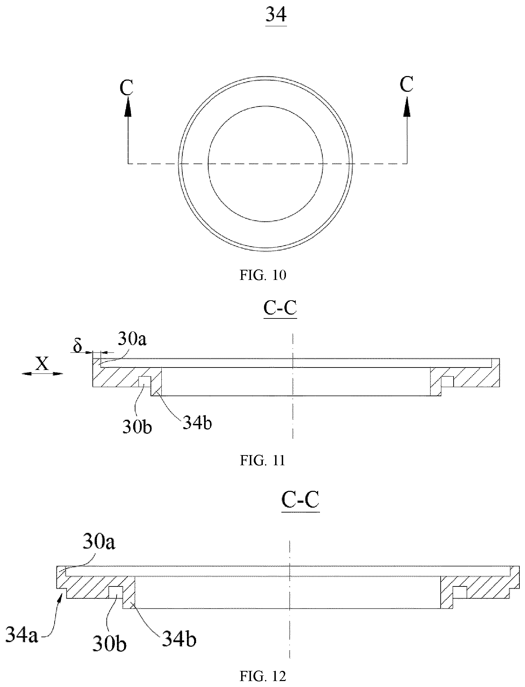

As shown in FIGS. 10 and 11, in some embodiments, the size δ of the boss 30a along the first direction X satisfies δ≥ 0.2mm, the first direction X is the direction passing through the geometric center of the sealing element 34 and perpendicular to the thickness direction of the first wall 313.

Exemplarily, δ can be 0.2mm, 0.4mm, 0.6mm, 0.8mm, or 1mm, etc.

It can be understood that, the smaller the δ, the weaker the structural strength of the boss 30a, the poorer the manufacturability of the boss 30a, and the weaker the strength of the fitting between the boss 30a and the groove 30b. When the battery cell 30 is subjected to loads such as impact or vibration, the risk of the boss 30a detaching from the groove 30b is higher.

After systematic research and extensive experimentation, the inventors found that the setting of δ≥ 0.2mm can guarantee the manufacturability of the boss 30a while reducing the risk of the boss 30a detaching from the groove 30b, to further improve the sealing effect of the sealing element 34 and the safety performance of the battery cell 30.

As shown in FIGS. 10, 11 and 12, in some embodiments, the boss 30a is provided at the outer edge of the peripheral side of the sealing element 34.

It can be understood that when the battery cell 30 is subjected to loads such as impact or vibration, due to the cantilever beam effect, the closer to the centerline of the through hole 313a, the greater the deformation between the electrode terminal 33 and the first wall 313, and the greater the distance between the corresponding electrode terminal 33 and the first wall 313. The further away from the centerline of the through hole 313a, the smaller the distance between the electrode terminal 33 and the first wall 313 after deformation.

Therefore, the boss 30a provided at the outer edge of the peripheral side of the sealing element 34 is beneficial for maintaining the interlocking state between the boss 30a and the groove 30b under loads such as vibration or impact, reducing the risk of the boss 30a detaching from the groove 30b, and thereby reducing the risk of sealing failure of the sealing element 34 on the battery cell 30, which is beneficial to improving the safety performance of the battery cell 30.

As shown in FIGS. 5, 6, 9 and 12, in some embodiments, the sealing element 34 is provided with an avoidance recess 34a. The avoidance recess 34a is arranged at the edge of the side of the sealing element 34 away from the boss 30a, and at least part of the avoidance recess 34a is opposite to the protrusion.

After the boss 30a fitted with the groove 30b, if the fit between them is relatively tight, the sealing element 34 will have a risk of cracking due to certain internal stress. With the avoidance recess 34a provided, the internal stress of the sealing element 34 can be relieved, reducing the risk of cracking due to excessive internal stress, which is beneficial to improving the structural strength of the sealing element 34.

In some embodiments, the electrode terminal 33 is provided with the groove 30b.

The groove 30b of the electrode terminal 33 can be arranged in a downward direction away from the sealing element 34, and correspondingly, the boss 30a fitted with the groove 30b is provided on the sealing element 34.

The electrode terminal 33 is provided with the groove 30b. The groove 30b of the electrode terminal 33 can be fitted with the boss 30a of the sealing element 34 to limit the sealing element 34 and maintain the sealing performance of the sealing element 34 on the battery cell 30 when subjected to loads such as vibration or impact.

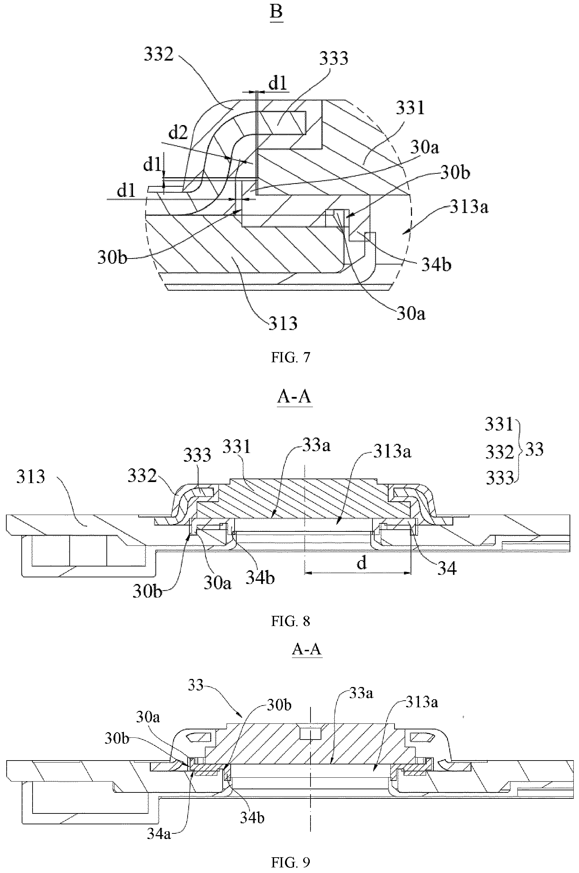

As shown in FIG. 7, in some embodiments, the distance d1 between the inner wall of the boss 30a and the groove 30b satisfies: 0.05mm≤d1≤0.2mm.

For example, d1 can be 0.05mm, 0.1mm, 0.15mm, or 0.2mm, etc.

It can be understood that if the minimum distance between the inner wall of the boss 30a and the groove 30b is too large, the reliability of the fit between the boss 30a and groove 30b is low. However, if the minimum distance between the boss 30a and the inner wall of groove 30b is too small, the manufacturing accuracy of the boss 30a and groove 30b is required to be high, and it is not easy for the boss 30a and the groove 30b to be fitted together during the assembly process.

After systematic research and extensive experiments, the inventors found that the setting of 0.05mm≤d1≤0.2mm is beneficial to reducing the assembly difficulty of the boss 30a and groove 30b, while ensuring the reliability of the fit between the boss 30a and groove 30b.

As shown in FIGS. 5 to 9, in some embodiments, the electrode terminal 33 includes a conductive portion 331 and an injection molding portion 332. The injection molding portion 332 is provided on the peripheral side of the conductive portion 331, and the groove 30b is formed on the injection molding portion 332.

In this way, the portion of the end face 33a located in the conductive portion 331 can be configured for electrical connection with the electrode assembly 32, which is beneficial to increasing the area of the electrical connection between the electrode terminal 33 and the tab, and improving the current carrying capacity of the electrode terminal 33. And the groove 30b is formed in the injection molding portion 332, which has strong machinability.

Please continue to refer to FIGS. 5 to 9. In some embodiments, the electrode terminal 33 further includes a welding portion 333. The welding portion 333 is located inside the injection molding portion 332. The minimum distance d2 from the edge of the injection molding portion 332 to the welding portion 333 satisfies: d2≥0.2mm.

For example, d2 can be 0.2mm, 0.4mm, 0.5mm, or 0.8mm, etc.

Due to the setting of the injection molding portion 332 and the welding portion 333 integrated by injection molding, and the injection molding portion 332 capable of providing a certain insulation effect on the welding portion 333 and the conductive portion 331, d2≥0.2mm is set by the inventors through long-term research and extensive experiments.

In some embodiments, the sealing element 34 is provided with a protrusion 34b protruding in the direction toward the first wall 313 and located within the through hole 313a.

If the protrusion 34b is located inside the through hole 313a, the inner wall of the through hole 313a can be configured to provide a certain limiting effect on the protrusion 34b. When the battery cell 30 is subjected to loads such as impact or vibration, with the limiting effect of the inner wall of the through hole 313a on the protrusion 34b, the risk of the sealing element 34 detaching from the first wall 313 can be reduced, which is beneficial to further ensuring the sealing effect of the sealing element 34 and improving the safety performance of the battery cell 30.

In some embodiments, the sealing element 34 is provided with the groove 30b, the first wall 313 is provided with the boss 30a protruding towards the sealing element 34.

The groove 30b of the sealing element 34 is recessed toward the first wall 313, and the boss 30a of the first wall 313 is fitted with the groove 30b of the sealing element 34 to limit the displacement of the sealing element 34 relative to the first wall 313. When the battery cell 30 is subjected to loads such as impact or vibration, the possibility of sealing failure of the sealing element 34 is reduced, which is beneficial to improving the safety performance of the battery cell 30.

In some embodiments, the boss 30a is formed at the edge of the side of the first wall 313 near the through hole 313a.

The boss 30a is formed at the edge of the side of the first wall 313 near the through hole 313a, and the groove 30b is formed at the position corresponding to the boss 30a of the sealing element 34. Therefore, the boss 30a is easy to be machined and facilitates the fit between the boss 30a and the groove 30b during the assembly process. In addition, with the groove 30b provided at a position on the sealing element 34 near the through hole 313a, the internal stress of the sealing element 34 can be reduced, which is beneficial to reducing the risk of the sealing element 34 cracking due to excessive internal stress.

The battery 10 provided according to the embodiments of the present disclosure includes the battery cell 30 provided in any of the above embodiments.

The battery 10 provided according to the embodiments of the present disclosure has the same technical effect due to the use of the battery cell 30 provided in any of the above embodiments, and will not be repeated here.

The electrical apparatus provided according to the embodiments of the present disclosure includes the battery 10 provided in the above embodiment for providing electrical energy.

The electrical apparatus provided in the embodiments of the present disclosure has the same technical effect due to the use of the battery 10 provided in the embodiments of the present disclosure, and will not be repeated here.

It should be noted that, without conflict, the embodiments and features in the embodiments of the present disclosure can be combined with each other.

Finally, it should be noted that: the above embodiments are only used to illustrate, not to limit, the technical solution of the present disclosure. Although the present disclosure is described in detail with reference to the foregoing embodiments, those skilled in the art should understand that they may still modify the technical solutions described in the foregoing embodiments, or replace some of the technical features with equivalents, but these modifications or replacements do not depart the essence of the corresponding technical solutions from the gist and scope of the technical solutions of each embodiment of the present disclosure.

## Claims

1. A battery cell, comprising:
a housing comprising a first wall with a through hole;
an electrode terminal provided on the first wall and comprising an end face facing the first wall, and at least part of the end face being opposite to the through hole; and
a sealing element at least partially surrounding a peripheral side of the through hole, and at least part of the sealing element being connected between the end face and the first wall;
wherein the sealing element is provided with one of a boss and a groove, at least one of the electrode terminal or the first wall is provided with the other of the boss and the groove, and the boss is fitted with the groove.

2. The battery cell according to claim 1, wherein a size of the boss along a thickness direction of the first wall is h, a distance between the boss and a centerline of the through hole is d, and 1.8mm²≤h*d≤120mm² is satisfied.

3. The battery cell according to claim 2, wherein 2mm²≤h*d≤90mm² is satisfied.

4. The battery cell according to any one of claims 1 to 3, wherein the first wall is provided with the boss and the sealing element is provided with the groove.

5. The battery cell according to any one of claims 1 to 4, wherein the electrode terminal is provided with the boss protruding towards the sealing element, and the sealing element is provided with the groove.

6. The battery cell according to any one of claims 1 to 5, wherein the sealing element is provided with the boss, and at least one of the electrode terminal or the first wall is provided with the groove.

7. The battery cell according to any one of claims 1 to 6, wherein a size h of the boss along a thickness direction of the first wall satisfies: h≤3mm.

8. The battery cell according to claim 7, wherein 0.2mm≤h≤3mm is satisfied.

9. The battery cell according to any one of claims 1 to 8, wherein a size δ of the boss along a first direction satisfies δ≥0.2mm, and the first direction is a direction passing through a geometric center of the sealing element and perpendicular to a thickness direction of the first wall.

10. The battery cell according to claim 6, wherein the boss is provided at an outer edge of a

11. The battery cell according to claim 10, wherein the sealing element is provided with an avoidance recess arranged at an edge of a side of the sealing element facing away from the boss, and at least part of the avoidance recess is opposite to the boss.

12. The battery cell according to claim 6, 10, or 11, wherein the electrode terminal is provided with the groove.

13. The battery cell according to claim 12, wherein a distance d1 between the boss and an inner wall of the groove satisfies: 0.05mm≤d1≤0.2mm.

14. The battery cell according to claim 12 or 13, wherein the electrode terminal comprises a conductive portion and an injection molding portion provided on a peripheral side of the conductive portion, and the groove is formed on the injection molding portion.

15. The battery cell according to claim 14, wherein the electrode terminal further comprises a welding portion arranged inside the injection molding portion, and a minimum distance d2 from an edge of the injection molding portion to the welding portion satisfies d2≥0.2mm.

16. The battery cell according to any one of claims 1 to 15, wherein the sealing element is provided with a protrusion protruding towards the first wall and located within the through hole.

17. The battery cell according to any one of claims 1 to 16, wherein the sealing element is provided with the groove, and the first wall is provided with the boss protruding towards the sealing element.

18. The battery cell according to claim 17, wherein the boss is formed at an edge of a side of the first wall near the through hole.

19. A battery comprising the battery cell according to any one of claims 1 to 18.

20. An electrical apparatus comprising the battery according to claim 19 for providing electrical energy.
